# DEMANDE DE BREVET EUROPEEN

(11) **EP 4 627 913 A1**
(43) Date de publication de la demande: **08.10.2025**
(21) Numéro de dépôt: 25155991.0
(22) Date de dépôt: 05.02.2025
(51) Int. Cl.: A01K 7/00, A01G 31/00, A01K 39/02, A01C 23/04

(54) **PROCÉDÉ ET INSTALLATION D'ENRICHISSEMENT EN OXYGÈNE DES EAUX UTILISÉES POUR L'ABREUVEMENT D'ANIMAUX OU POUR L'IRRIGATION**

(30) Priorité: 29.02.2024 FR 2402047
(71) Demandeur: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: COUSIN, Franck, 75007 Paris (FR); IBARRA, Dominique, 75007 Paris (FR); LE DRU, Pauline, 75007 Paris (FR)
(74) Mandataire: Air Liquide

(57) **Abrégé**

Installation de dopage en oxygène d'une eau, eau destinée à l'irrigation de culture de végétaux ou à l'abreuvement d'animaux (40), comprenant des moyens d'amenée d'eau aux animaux pour leur abreuvement ou à la dite culture de végétaux, moyens d'amenée comprenant :
- un injecteur (7, 8) permettant d'injecter un gaz dans de l'eau ;
- une ligne d'arrivée d'eau (20) et au moins une ligne d'arrivée de gaz (3, 4, 5, 6), parvenant dans l'injecteur ; et
- au moins une source (1, 60) d'oxygène ou d'un mélange gazeux comportant de l'oxygène, apte à délivrer de l'oxygène dans la ligne de gaz,
- un bac d'eau (17) à la pression atmosphérique, l'injecteur étant alimenté en eau à partir de l'eau située dans ce bac, bac qui peut être alimenté par ailleurs en eau neuve (20);
- un serpentin (10) apte à recevoir de l'eau chargée en oxygène dissous en provenance de l'injecteur, eau qui parvient au serpentin grâce à une pompe (9), serpentin qui permet de créer un temps de contact eau/oxygène;
où ladite source est un concentrateur d'oxygène (60) fournissant de l'air enrichi en oxygène ;
se caractérisant en ce que l'installation comporte un capteur de pression d'eau (90) au refoulement de la pompe, ainsi qu'un capteur de débit d'eau (80), préférentiellement installé au refoulement de la pompe, le capteur de débit autorisant, lors d'un démarrage de la pompe, la mise en service électrique du concentrateur, tandis que lorsque la pression en sortie de la pompe monte à un niveau de consigne de pression souhaité, le capteur de pression autorise l'ouverture d'une électrovanne (5) située entre le concentrateur et l'aspiration de la pompe.

## Description

La présente invention s'intéresse aux procédés et installations d'enrichissement en oxygène des eaux utilisées pour l'abreuvement d'animaux ou encore pour l'irrigation.

Dans le domaine de l'abreuvement, elle s'intéresse notamment aux élevages de volailles et de porcs ou encore de lapins.

On reviendra plus loin dans la présente description sur le cas des eaux d'irrigation et intéressons nous ci-dessous au cas de l'élevage. On peut rappeler ici par exemple que pour qu'un poulet atteigne le poids de 1,5 kg, il fallait environ 120 jours en 1920, environ 44 jours en 1980 et environ 33 jours seulement en 1998.

Selon diverses études, des relevés expérimentaux dans de tels élevages montrent qu'à âge égal (49 jours), le poids moyen d'un poulet de chair a doublé entre 1967 et 1996. Par ailleurs, au cours des dernières années, la demande des consommateurs a évolué vers des animaux moins gras et des viandes de volaille prédécoupées.

Ces objectifs de production ont été atteints grâce à l'évolution des programmes nutritionnels et des conditions d'élevage, associée à la sélection génétique d'animaux à croissance rapide, avec un indice de consommation bas, un engraissement faible et un développement accru des masses musculaires.

La génétique, l'hygiène, la prophylaxie et l'amélioration des conditions d'élevage ont, depuis vingt ans, considérablement réduit la mortalité des volailles dans les élevages. Et néanmoins, il est nécessaire de tenir compte des aspects suivants qui apparaissent dans toutes les études lancées sur le sujet :
- une croissance corporelle rapide augmente les besoins en oxygène et la production de chaleur.
- l'augmentation du rendement en masse pectorale accentue le déséquilibre entre le développement de la masse musculaire et celui d'autres tissus comme le rein, le coeur et les poumons. Dans les élevages actuels, l'évolution des caractéristiques de croissance s'accompagne quelquefois d'une augmentation de la fréquence des défaillances des systèmes cardiovasculaires et respiratoires, caractérisées par une recrudescence des "coups de chaleur", des syndromes de "mort subite" et des ascites (accumulation de liquide dans la cavité péritonéale).

On peut résumer les études disponibles dans ce domaine par le fait que l'oxygène est un facteur limitant qui peut contribuer à expliquer la fréquence des maladies cardio-vasculaires et respiratoires chez le poulet de chair. La comparaison de génotypes à vitesses de croissance variables montre que l'incidence des ascites et la vitesse de croissance élevées sont associées à une pression en oxygène basse et une pression en CO₂ élevée dans le sang veineux. Une disponibilité insuffisante en oxygène semble donc être une cause principale des dysfonctionnements des appareils cardio-vasculaire et respiratoire chez les poulets à croissance rapide.

Ce qui précède démontre la nécessité de rétablir un équilibre entre les besoins métaboliques imposés par la sélection pour une croissance rapide, et l'aptitude du système respiratoire, fournisseur d'oxygène, à y répondre.

Une approche possible serait d'augmenter la teneur en oxygène dans l'environnement du poulet d'élevage, malheureusement les élevages intensifs nécessitent une forte ventilation pour évacuer la chaleur et l'humidité produite par les volatiles, et ainsi la consommation d'oxygène pour passer de 20,9 à 27 % par exemple serait rédhibitoire et pénaliserait définitivement la solution sur un plan économique.

La Demanderesse a effectué de nombreux travaux sur cette question, on pourra notamment se reporter au document EP-3 709 793 (WO2019097142), qui a proposé une nouvelle installation permettant le dopage en oxygène de l'eau d'abreuvement de tels animaux d'élevage.

La Demanderesse a ultérieurement, dans le document FR-3 134 682, proposé des améliorations à l'installation qui était proposée dans ce document antérieur EP'793.

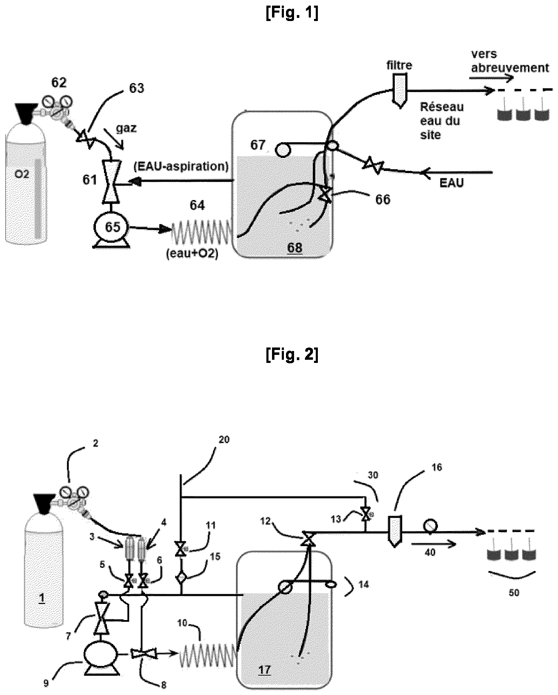

Pour mieux expliciter quelle est la situation de ce domaine technique on peut d'une part se reporter à la [Figure 1] annexée qui illustre le contenu d'une installation d'abreuvement conforme au document antérieur WO2019/097142 cité ci-dessus.

On reconnait sur cette [Figure 1] les éléments suivants :
- un injecteur 61, par exemple de type Venturi, permettant d'injecter un gaz dans de l'eau ;
- sur cet injecteur 61 parviennent une ligne d'arrivée d'eau (« EAU ») et une ligne d'arrivée de gaz (« GAZ »), ligne de gaz ici reliée en sa partie amont à un stockage d'oxygène (représenté par une bouteille) , ou d'un mélange de gaz comportant de l'oxygène, par exemple un mélange de 70 % d'oxygène et 30 % de CO₂.
- un détendeur 62 ;
- une vanne de réglage 63 (vanne de réglage gaz permettant, du fait de sa calibration, d'injecter une quantité de gaz choisie dans l'injecteur);
   - - un serpentin 64 : la longueur du serpentin permet un temps de contact gaz / eau choisi, généralement préférentiellement supérieur à 10 secondes, et généralement plus préférentiellement situé entre 10 et 30 secondes ;
   - - une pompe de circulation d'eau 65 : la pompe à eau permet d'atteindre des vitesses d'eau élevées dans le serpentin ;
- un déverseur 66 ;
- une vanne flotteur 67 ;
- un bac d'eau à la pression atmosphérique (68).

Et cette proposition d'installation antérieure avait déjà, en elle-même, donné des résultats tout à fait avantageux pour limiter les investissements, puisqu'elle évite l'utilisation (onéreuse) d'un analyseur d'oxygène.

La ligne « EAU » arrivant par la droite alimente le bain en eau « fraîche » ou neuve, permettant ainsi que le bac soit d'abord rempli en eau avant le démarrage, la vanne flotteur 67 ( par exemple du type chasse d'eau de WC) permet de maintenir un niveau d'eau constant dans le bac .

L'utilisation d'un bac d'eau à la pression atmosphérique, permet à la fois de maintenir une pression basse vers le réseau d'abreuvement et de maintenir une pression élevée dans le serpentin pour dissoudre l'oxygène.

Le déverseur maintient toujours la même pression dans le circuit quelle que soit la consommation d'eau.

Le système d'injection d'oxygène fonctionne lorsque le réseau d'abreuvement est alimenté en eau, et en cas d'arrêt le système est coupé.

Du bassin part une ligne "eau aspiration" qui envoie de l'eau du bassin vers l'injecteur, c'est donc un mélange d'eau recyclée et d'eau fraîche. En d'autres termes, sauf lorsque les animaux ne consomment pas d'eau l'injecteur reçoit 100% d'eau recyclée (rappelons que les animaux consomment toujours de l'eau, pour les stopper on doit éteindre la lumière).

Via la pompe 65 et le serpentin de dissolution 64 , l'eau peut être dirigée vers la zone d'abreuvement, elle passe à l'extérieur du bac 68 comme on l'aura compris, en passant par le déverseur 66. Le déverseur est également situé hors du bain mais il peut arriver que pour des questions de place/logabilité le déverseur doive être positionné dans l'eau du bac.

Comme on le voit sur la figure 1, l'installation permet si nécessaire de déverser une partie de l'eau provenant du serpentin dans le bac et une autre partie vers l'abreuvement.

On peut maintenant expliquer en liaison avec la [Figure 2] annexée les améliorations qui avaient été apportées par la Demanderesse ultérieurement dans le cadre du document FR-3 134 682.

La nomenclature des éléments présents sur la [Figure 2] est la suivante :
- 1 : bouteille de gaz
- 2 : détendeur de gaz (détendre le gaz à une pression supérieure à la pression du réseau d'eau)
- 3 : débitmètre aspiration (permet de régler le débit d'oxygène à l'aspiration de la pompe 9)
- 4 : débitmètre refoulement (permet de régler le débit d'oxygène au refoulement de la pompe 9)
- 5 : électrovanne aspiration (commandée par la mise en service de la pompe et par un détecteur de débit)
- 6 : électrovanne refoulement (commandée par la mise en service de la pompe et par détecteur de débit et par contacteur de niveau avec temporisation)
- 7 : venturi aspiration (permet d'injecter un faible débit de gaz dans l'eau à l'aspiration de la pompe sans créer de cavitation)
- 8 : venturi refoulement (permet d'injecter le gaz dans l'eau au refoulement de la pompe, au débit correspondant à l'eau en complément du débit d'aspiration )
- 9 : pompe (permet de monter la pression de l'eau et de mettre un place un débit d'eau, préférentiellement situé entre 1 et 2,5 m/s)
- 10 : serpentin (permet de dissoudre l'oxygène dans l'eau, avec un débit d'eau préférentiellement situé entre 1 et 2,5 m/s et un temps de contact préférentiellement situé entre 10 et 20 secondes)
- 11 : électrovanne arrivée d'eau (permet de maintenir le niveau d'eau dans le bac et d'enclencher l'injection d'oxygène en actionnant le repère 6)
- 12 : déverseur (permet de maintenir le débit d'eau et donc la vitesse dans le serpentin, et ainsi fournir la pression de sortie désirée au site utilisateur)
- 13 : électrovanne (Normalement Ouverte (NO), permet de bipasser le système en cas d'arrêt de la pompe ou du système de contrôle, et assurer ainsi que le animaux ne seront jamais privés d'eau)
- 14 : contacteur de niveau (permet de gérer le niveau d'eau dans la cuve et de déclencher l'injection d'oxygène à gros débit, repère 6)
- 15 : régulateur de débit d'eau, réglant le débit d'arrivée d'eau neuve
- 16 : filtre
- 17 : bac d'eau
- 20 : arrivée d'eau fraiche
- 30 : recirculation/bipass
- 40 : réseau d'eau du site d'élevage
- 50 : postes d'abreuvement (pipettes)

Et cette installation selon l'art antérieur telle que schématisée en [Figure 2] propose en effet de mettre en œuvre DEUX injections simultanées d'oxygène ou d'un mélange comportant de l'oxygène :
- l'une en amont de la pompe ;
- et l'autre en aval de la pompe ;
le débit de l'injection effectué en amont étant plus faible que le débit effectué en aval de la pompe, le débit de gaz injecté en amont représentant préférentiellement entre 5 et 25% de la saturation à l'oxygène pur de l'eau dans les conditions considérées, 25 % étant considérée comme la limite qui peut générer un phénomène de cavitation, tandis que le débit en aval de la pompe représente le complément de la première injection pour atteindre la valeur désirée de teneur globale.

Si toute la description précédente s'attachait à décrire les phénomènes se produisant dans le domaine de l'abreuvement d'animaux, on doit comprendre que ces systèmes de dopage en oxygène d'eaux trouvent également une application pour la culture de végétaux et notamment la culture de végétaux sous serres et hors-sols, mais plus généralement à tout mode de réalisation d'une culture de végétaux, et notamment une culture en milieu contrôlé : sous serre, en cave, à l'abri de la lumière, en mode hors sol, et notamment en mode hydroponie, aquaponie, aéroponie, bioponie ou autre.

Ainsi considérons le cas des productions sous serres, cultivées en mode hors-sol. Ces productions gagnent du terrain partout dans le monde, dans les pays riches comme dans les pays pauvres. Elles sont une des solutions pour fournir aux générations futures une alimentation saine et sans risque pour la santé. Pour cela, elles utilisent les ressources naturelles rares telles que l'eau ainsi que les fertilisants, de la manière la plus efficace qui soit.

Par exemple, on considère généralement que la culture d'un kilo de tomates cultivé en plein champ utilise environ 60 litres d'eau, alors que sous serre et cultivées en hors-sol, les besoins en eau se limite à environ 15 litres.

Dans le cas d'une serre de dernière génération, il est même possible de faire une économie supplémentaire de 4 litres par kilo. Ces économies sont le résultat d'une utilisation plus efficace de l'eau grâce à la maîtrise de la teneur en oxygène des solutions nutritives.

L'enrichissement en oxygène des eaux d'irrigation des cultures hors sol permet, cela a été démontré, d'augmenter le rendement de production :
En effet, on connaît bien les raisons pour lesquelles les racines des plantes ont certes besoin d'eau mais ont également besoin d'oxygène, et notamment le fait que lorsque la teneur en oxygène dans le sol n'est pas suffisante l'absorption de l'eau par la plante est limitée et la sensibilité de la plante aux maladies est accrue.

On sait par ailleurs que l'enrichissement en oxygène des eaux d'irrigation à l'air limite la teneur à 10mg/L au maximum, tandis que l'enrichissement en oxygène dissous à l'aide d'oxygène pur (O₂) permet d'atteindre des teneurs bien plus élevées (typiquement 40 mg/l) .

Revenons maintenant au document FR-3 134 682, qui décrivait une configuration d'injection qui permet d'injecter un oxygène provenant de sources variées, et qui proposait notamment la mise en œuvre d'une source de production autonome (sur site) tels que les « concentrateurs » d'oxygène, bien connus et utilisés dans le domaine médical (fournissant aux patients de l'air enrichi en oxygène).

Le débit à l'aspiration de la pompe mise en place dans l'installation selon ce document antérieur étant relativement faible, cette technologie de concentrateur se révélait et se révèle toujours très bien positionnée pour effectuer une telle fourniture.

Depuis les travaux rapportés dans ce document FR-3 134 682, il est apparu nécessaire à la Demanderesse d'améliorer cette proposition de mise en œuvre de tels concentrateurs d'oxygène dans de telles installations, ceci avec les objectifs suivants :
- afin que l'oxygène produit soit effectivement « aspiré » par la pompe ;
- afin d'améliorer la sécurité du système.

Nous allons ci-dessous expliquer la nécessité de s'intéresser à ces objectifs techniques.

En effet, l'utilisation d'un concentrateur ne permet pas de disposer d'une pression gaz suffisante pour injecter au refoulement d'une pompe de circulation d'eau. Le concentrateur ne délivre pas une pression au dessus de 1 bar.

On aurait pu penser à utiliser un venturi inséré à la sortie de la pompe pour aspirer le gaz, . mais cette fonctionnalité est très difficile à mettre en œuvre. Le design d'un venturi est très spécifique aux facteurs de débit d'eau, de pression d'eau, et de débit et pression du gaz, et un changement de caractéristiques pendant l'utilisation met en péril le processus même d'aspiration .

Le principe d'une pompe à eau est d'aspirer un liquide et de le véhiculer par une mise en pression . Donc il y a aspiration et l'on peut profiter de la dépression, générée par cette aspiration d'eau, pour introduire un gaz à basse voire très basse pression .

S'agissant maintenant de la question de la sécurité, on sait qu'il n'est pas souhaitable d'injecter trop de gaz à l'endroit de la pompe car la pompe « cavite ».

On rappelle que la « cavitation » est la formation et l'implosion rapide de bulles de gaz dans l'eau lorsque celle-ci circule à travers la pompe. La cavitation est un phénomène causé par l'eau bouillante ou la saturation de gaz dans le liquide, phénomène qui représente un problème important qui doit être surveillé lorsque l'on met en oeuvre des pompes, qui peut avoir des effets dévastateurs sur de telles pompes.

La cavitation engendre une usure prématurée, mais l'introduction d'un excès de gaz à l'aspiration va également empêcher l'aspiration de l'eau, la pompe va donc tourner ( rotation) en présence d'un gaz, elle va chauffer par les frottements , la situation peut donc devenir critique , notamment en présence de gaz qui ne sont pas neutres ( gaz combustibles ou comburants comme l'oxygène) .

Il y a donc un risque avéré de sécurité s'il y a trop de gaz par rapport au débit d'eau. Injecter un gaz dans une pompe qui n'a pas atteint son régime de croisière, c'est prendre le risque d'envoyer trop de gaz par rapport au débit d'eau.

Pour éviter ce risque on pourrait utiliser un détecteur de débit d'eau, mais cet équipement indique un débit, il n'est pas capable d'indiquer si la pompe est à son débit optimum.

Comme on le verra plus en détails dans ce qui suit la présente invention s'attache à proposer une mise en œuvre améliorée d'un tel concentrateur dans une telle installation de dopage en oxygène d'eaux destinées à de l'abreuvement ou à de l'irrigation.

On l'a donc compris dans ce qui précède, l'injection du gaz produit par le concentrateur devrait être effectuée à l'aspiration de la pompe, car la pression y est plus basse que la pression de sortie du générateur, en gardant à l'esprit qu'il n'est pas souhaitable d' utiliser une pompe (compresseur) pour pressuriser le gaz, ce qui représenterait un coût supplémentaire et qui pose des difficultés de compatibilité des matériaux pour l'oxygène.

On pourrait alors envisager d'installer une vanne en sortie de générateur pour créer une petite pression, et ainsi ne pas aspirer de l'air, mais on préfère selon la présente invention une autre solution qui va consister dans le fait d'installer un capteur de pression d'eau en aval (refoulement) de la pompe, ainsi qu'un capteur de débit d'eau, préférentiellement installé au refoulement de la pompe, qui vont permettre de fonctionner de la façon suivante :
- Lors d'un démarrage de la pompe, le capteur de débit autorise la mise en service électrique du concentrateur (comme il apparaitra clairement à l'homme du métier, le capteur de débit « voit » plus rapidement la mise en service de la pompe et donc il est en mesure de déclencher plus rapidement la mise en service électrique du concentrateur).
- La pression à la sortie de la pompe monte alors à sa pression de service et lorsque la pression en sortie de la pompe monte à un niveau de consigne de pression souhaité, le capteur de pression autorise alors l'ouverture d'une électrovanne située entre le concentrateur et l'aspiration de la pompe.
   (Le concentrateur a ainsi le temps de se mettre en service avant l'ouverture de l'électrovanne qui est pilotée par le capteur de pression).

S'agissant de ce niveau de consigne de pression on préférera s'exprimer en terme de % de la pression maximum générée par la pompe, et on préfèrera selon l'invention situer la consigne dans la gamme allant de 50 à 100 % de cette pression maximum.

Le capteur de débit est préférentiellement positionné au refoulement de la pompe, mais pour des raisons d'encombrement on peut envisager de l'installer en amont de la pompe.

On favorise dans ce montage deux objectifs :
- Eviter que de l'eau puisse rentrer dans le concentrateur s' il n'est pas en service et en mesure de délivrer une légère pression.
- S'assurer que la pompe est à son débit optimum avant d'injecter un gaz à l'aspiration de la pompe à eau (pour éviter le risque de cavitation).

Ce montage permet de ne pas aspirer d'air si le concentrateur n'est pas en service.

En résumé, comme on l'aura donc compris à la lumière de ce qui précède, l'injection de gaz en provenance du concentrateur est effectuée à l'aspiration de la pompe, puisque qu'un concentrateur ne délivre pas assez de pression pour être « monté » au refoulement de la pompe (au refoulement de la pompe, la pression se situe typiquement entre 1 et 8 bars).

Selon un mode avantageux de mise en œuvre de l'invention, pour un fonctionnement optimisé de l'installation, on met en œuvre deux circuits gaz:
- un circuit alimenté par le concentrateur alimentant l'amont (aspiration) de la pompe ; et
- un circuit alimenté par une bouteille d'oxygène ou d'un mélange gazeux comportant de l'oxygène, amenant le gaz préférentiellement au refoulement de la pompe (même si une injection à l'aspiration pourrait être envisagée).

Cette mise en œuvre se révèle tout particulièrement avantageuse dans les cas suivants :
- quand le concentrateur connait une panne, ou nécessite une maintenance préventive
- quand le besoin de dissolution de gaz dans l'eau dépasse la possibilité de la pompe (risque de cavitation) il est alors possible d'envisager un ajout de gaz notamment au refoulement de la pompe par l'intermédiaire d'une ou de plusieurs bouteilles de gaz équipées de détendeur avec une pression supérieure à la pression de refoulement de la pompe en question.

Selon un mode avantageux de mise en œuvre de l'invention dans une telle présence de bouteilles « de secours », on dispose d'une vanne d'arrêt qui permet de basculer entre différents modes de fonctionnement :
- la mise en œuvre du générateur seul ;
- la mise en œuvre d'une (ou plusieurs) bouteille de gaz seule ;
- la mise en œuvre des deux sources générateur et bouteille de gaz.

Et l'on pourrait en effet poser la question suivante : peut-on installer l'arrivée de gaz « de secours » à l'aspiration de la pompe? Il apparait qu'un tel arrangement, s'il est parfaitement réalisable, n'est pas avantageux, tout simplement car le fait de devoir abaisser la pression du gaz à une pression proche de la pression atmosphérique coûte cher en équipement, mais aussi car on évite ainsi le risque d'envoyer de la pression dans le circuit du concentrateur.

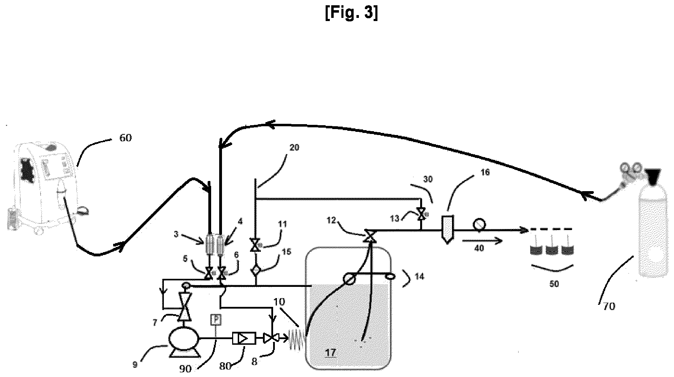

La [Figure 3] annexée illustre alors par une vue schématique partielle un mode de réalisation de l'invention .

La nomenclature des moyens présents sur l'installation illustrée en [Figure 3] est la suivante :
- 1 : bouteille de gaz
- 2 : détendeur de gaz (détendre le gaz à une pression supérieure à la pression du réseau d'eau)
- 3 : débitmètre aspiration (permet de régler le débit d'oxygène à l'aspiration de la pompe 9)
- 4 : débitmètre refoulement (permet de régler le débit d'oxygène au refoulement de la pompe 9)
- 5 : électrovanne aspiration (commandée par la mise en service de la pompe et par un détecteur de débit)
- 6 : électrovanne refoulement (commandée par la mise en service de la pompe et par détecteur de débit et par contacteur de niveau avec temporisation)
- 7 : venturi aspiration (permet d'injecter un faible débit de gaz dans l'eau à l'aspiration de la pompe sans créer de cavitation)
- 8 : venturi refoulement (permet d'injecter le gaz dans l'eau au refoulement de la pompe, au débit correspondant à l'eau en complément du débit d'aspiration )
- 9 : pompe (permet de monter la pression de l'eau et de mettre un place un débit d'eau, préférentiellement situé entre 1 et 2,5 m/s)
- 10 : serpentin (permet de dissoudre l'oxygène dans l'eau, avec un débit d'eau préférentiellement situé entre 1 et 2,5 m/s et un temps de contact préférentiellement situé entre 10 et 20 secondes
- 11 : électrovanne arrivée d'eau (permet de maintenir le niveau d'eau dans le bac et d'enclencher l'injection d'oxygène en actionnant le repère 6)
- 12 : déverseur (permet de maintenir le débit d'eau et donc la vitesse dans le serpentin, et ainsi fournir la pression de sortie désirée au site utilisateur)
- 13 : électrovanne (Normalement Ouverte (NO), permet de bipasser le système en cas d'arrêt de la pompe ou du système de contrôle, et assurer ainsi que le animaux ne seront jamais privés d'eau)
- 14 : contacteur de niveau (permet de gérer le niveau d'eau dans la cuve et de déclencher l'injection d'oxygène à gros débit, repère 6)
- 15 : régulateur de débit d'eau, réglant le débit d'arrivée d'eau neuve
- 16 : filtre
- 17 : bac d'eau
- 20 : arrivée d'eau fraiche
- 30 : recirculation/bipass
- 40 : réseau d'eau du site d'élevage
- 50 : postes d'abreuvement (pipettes)
- 60 : générateur (concentrateur)
- 70 : bouteille d'oxygène ou d'un mélange gazeux comportant de l'oxygène
- 80 : capteur de débit
- 90 : capteur de pression

Des essais de mise en œuvre pratique de la présente invention (injection à l'aspiration de la pompe, en une localisation où la pression est plus basse que la pression du générateur oxygène, attente de la montée en pression de la pompe pour injecter l'oxygène ou le gaz comportant de l'oxygène), ont été effectués dans les conditions suivantes :
- Un débit de 1,5l/min de gaz est apparu suffisant pour répondre à la demande d'un élevage de poulets, avec un débit de consommation de 5 I/min d'eau soit 300l/h * 20 h = 6000 l/j (soit la consommation maximale d'un bâtiment).
- Il faut compter 20 minutes pour passer d'une eau à l'équilibre (dans l'air ) à 30 mg/l d'oxygène.
- le générateur a fonctionné de façon stable pendant plusieurs heures à une consommation de 300l/h , la teneur dans l'équipement est restée stable, permettant de valider ce test.

La présente invention concerne alors une installation de dopage en oxygène d'une eau, eau destinée à l'irrigation de culture de végétaux ou à l'abreuvement d'animaux, comprenant des moyens d'amenée d'eau aux animaux pour leur abreuvement ou à la dite culture de végétaux, moyens d'amenée comprenant :
- un injecteur permettant d'injecter un gaz dans de l'eau ;
- une ligne d'arrivée d'eau et au moins une ligne d'arrivée de gaz, parvenant dans l'injecteur ; et
- au moins une source d'oxygène ou d'un mélange gazeux comportant de l'oxygène, apte à délivrer de l'oxygène dans la ligne de gaz,
- un bac d'eau à la pression atmosphérique, l'injecteur étant alimenté en eau à partir de l'eau située dans ce bac, bac qui peut être alimenté par ailleurs en eau neuve ;
- un serpentin apte à recevoir de l'eau chargée en oxygène dissous en provenance de l'injecteur, eau qui parvient au serpentin grâce à une pompe , serpentin qui permet de créer un temps de contact eau/oxygène;
- l'eau issue du serpentin transitant par un dispositif tel qu'un déverseur , pour pouvoir être dirigée en totalité vers l'abreuvement ou la culture ou bien pour partie vers l'abreuvement ou culture et pour partie dans le bac ;

où l'installation comprend des moyens de réalisation d'une injection dans l'eau, d'oxygène ou d'un mélange comportant de l'oxygène à partir de ladite source, injection réalisée en amont de la pompe (aspiration), et où ladite source est un concentrateur d'oxygène fournissant de l'air enrichi en oxygène ;
se caractérisant en ce que l'installation comporte un capteur de pression d'eau en aval (refoulement) de la pompe, ainsi qu'un capteur de débit d'eau, préférentiellement installé au refoulement de la pompe, qui vont permettre de fonctionner de la façon suivante :
   - Lors d'un démarrage de la pompe, le capteur de débit autorise la mise en service électrique du concentrateur ;
   - La pression à la sortie de la pompe monte alors à sa pression de service et lorsque la pression en sortie de la pompe monte à un niveau de consigne de pression souhaité, le capteur de pression autorise alors l'ouverture d'une électrovanne située entre le concentrateur et l'aspiration de la pompe.

Selon un des modes de réalisation de l'invention, l'installation comprend outre ledit concentrateur, une autre source d'oxygène constituée par une ou plusieurs bouteilles d'oxygène ou d'un mélange gazeux comportant de l'oxygène, permettant l'injection de gaz à l'aspiration ou au refoulement de la pompe, et en ce l'on dispose de moyens tels qu'une vanne d'arrêt permettant de basculer entre les différents modes de fonctionnement suivants :
- la mise en œuvre du générateur seul ;
- la mise en œuvre de la (ou des) bouteille de gaz seule ;
- la mise en œuvre des deux sources générateur et bouteille de gaz.

## Revendications

1. Installation de dopage en oxygène d'une eau, eau destinée à l'irrigation de culture de végétaux ou à l'abreuvement d'animaux (50), comprenant des moyens d'amenée d'eau aux animaux pour leur abreuvement ou à la dite culture de végétaux, moyens d'amenée comprenant :
- un injecteur (7, 8) permettant d'injecter un gaz dans de l'eau ;
- une ligne d'arrivée d'eau (20) et au moins une ligne d'arrivée de gaz (3, 4, 5, 6), parvenant dans l'injecteur ; et
- au moins une source (1, 60) d'oxygène ou d'un mélange gazeux comportant de l'oxygène, apte à délivrer de l'oxygène dans la ligne de gaz,
- un bac d'eau (17) à la pression atmosphérique, l'injecteur étant alimenté en eau à partir de l'eau située dans ce bac, bac qui peut être alimenté par ailleurs en eau neuve (20);
- un serpentin (10) apte à recevoir de l'eau chargée en oxygène dissous en provenance de l'injecteur, eau qui parvient au serpentin grâce à une pompe (9), serpentin qui permet de créer un temps de contact eau/oxygène;
- l'eau issue du serpentin transitant par un dispositif tel qu'un déverseur (12), pour pouvoir être dirigée en totalité vers l'abreuvement ou la culture ou bien pour partie vers l'abreuvement ou culture et pour partie dans le bac (17) ;
où l'installation comprend des moyens de réalisation d'une injection d'oxygène ou d'un mélange comportant de l'oxygène dans l'eau, en amont de la pompe , et où ladite source est un concentrateur d'oxygène (60) fournissant de l'air enrichi en oxygène ;
**se caractérisant en ce que** l'installation comporte un capteur de pression d'eau (90) en aval (refoulement) de la pompe, ainsi qu'un capteur de débit d'eau (80), préférentiellement installé au refoulement de la pompe, qui vont permettre de fonctionner de la façon suivante :
- Lors d'un démarrage de la pompe, le capteur de débit autorise la mise en service électrique du concentrateur ;
- La pression à la sortie de la pompe monte alors à sa pression de service et lorsque la pression en sortie de la pompe monte à un niveau de consigne de pression souhaité, le capteur de pression autorise alors l'ouverture d'une électrovanne (5) située entre le concentrateur et l'aspiration de la pompe.

2. Installation selon la revendication 1 **se caractérisant en ce qu'**elle comprend outre ledit concentrateur (60), une autre source d'oxygène constituée par une ou plusieurs bouteilles (70) d'oxygène ou d'un mélange gazeux comportant de l'oxygène, permettant l'injection de gaz à l'aspiration ou au refoulement de la pompe, et en ce l'on dispose de moyens tels qu'une vanne d'arrêt permettant de basculer entre les différents modes de fonctionnement suivants :
- la mise en œuvre du générateur seul ;
- la mise en œuvre de la bouteille de gaz seule ;
- la mise en œuvre des deux sources générateur et bouteille de gaz.

3. Procédé de dopage en oxygène d'une eau, eau destinée à l'irrigation de culture de végétaux ou à l'abreuvement d'animaux (50), procédé mettant en œuvre une installation qui comprend des moyens d'amenée d'eau à la dite culture de végétaux ou aux animaux pour leur abreuvement, moyens d'amenée comprenant :
- un injecteur (7, 8) permettant d'injecter un gaz dans de l'eau ;
- une ligne d'arrivée d'eau (20) et au moins une ligne d'arrivée de gaz (3, 4, 5, 6), parvenant dans l'injecteur ; et
- au moins une source (1, 60) d'oxygène ou d'un mélange gazeux comportant de l'oxygène, apte à délivrer de l'oxygène dans la ligne de gaz,
- un bac d'eau (17) à la pression atmosphérique, l'injecteur étant alimenté en eau à partir de l'eau située dans ce bac, bac qui peut être alimenté par ailleurs en eau neuve (20);
- un serpentin (10) apte à recevoir de l'eau chargée en oxygène dissous en provenance de l'injecteur, eau qui parvient au serpentin grâce à une pompe (9), serpentin qui permet de créer un temps de contact eau/oxygène;
- l'eau issue du serpentin transitant par un dispositif tel qu'un déverseur (12), pour pouvoir être dirigée en totalité vers l'abreuvement ou la culture ou bien pour partie vers l'abreuvement ou culture et pour partie dans le bac (17) ;
où l'installation comprend des moyens de réalisation d'une injection d'oxygène ou d'un mélange comportant de l'oxygène dans l'eau, en amont de la pompe , et où ladite source est un concentrateur d'oxygène (60) fournissant de l'air enrichi en oxygène ;
**se caractérisant par** la mise en œuvre des mesures suivantes :
- L'installation comporte un capteur de pression d'eau (90) en aval (refoulement) de la pompe, ainsi qu'un capteur de débit d'eau (80), préférentiellement installé au refoulement de la pompe ;
- On autorise la mise en service électrique du concentrateur quand le capteur de débit détecte un démarrage de la pompe;
- La pression à la sortie de la pompe monte alors à sa pression de service et lorsque la pression en sortie de la pompe monte à un niveau de consigne de pression souhaité, on autorise, via le capteur de pression, l'ouverture d'une électrovanne (5) située entre le concentrateur et l'aspiration de la pompe.
